# EUROPÄISCHE PATENTSCHRIFT

(11) **EP 3 265 370 B1**
(45) Veröffentlichungstag und Bekanntmachung des Hinweises auf die Patenterteilung: **23.10.2019**
(21) Anmeldenummer: 16703953.6
(22) Anmeldetag: 05.02.2016
(51) Int. Cl.: B62J 9/00

(54) **BAUGRUPPE MIT EINEM STAUFACH AN EINEM MOTORISIERTEN ZWEIRAD**
ASSEMBLY HAVING A STORAGE COMPARTMENT ON A MOTORIZED TWO-WHEELED VEHICLE
MODULE COMPORTANT UN COMPARTIMENT DE RANGEMENT SUR UN DEUX-ROUES MOTORISÉ

(30) Priorität: 02.03.2015 DE 102015203696
(43) Veröffentlichungstag der Anmeldung: 10.01.2018
(73) Patentinhaber: Bayerische Motoren Werke Aktiengesellschaft, 80809 München (DE)
(72) Erfinder: DANNERBAUER, Franz, 94269 Rinchnach (DE)
(86) Internationale Anmeldenummer: PCT/EP2016/052454
(87) Internationale Veröffentlichungsnummer: WO 2016/139025

(56) Entgegenhaltungen:
- EP-A1- 2 168 849
- WO-A1-2009/101470
- WO-A1-2011/030321
- CN-Y- 2 749 754
- DE-A1- 4 101 116
- DE-A1- 4 102 714
- JP-A- H 107 053
- JP-A- H03 295 778
- JP-A- 2001 187 592
- JP-A- 2011 063 981
- JP-A- 2012 214 064
- US-A1- 2007 247 280

## Beschreibung

Die Erfindung betrifft ein motorisiertes Zweirad umfassend eine Baugruppe mit einem Staufach gemäß dem Oberbegriff des Anspruchs 1.

Bei dem motorisierten Zweirad kann es sich beispielsweise um einen Motorroller oder um ein Motorrad handeln.

Bisher wird zur Ver- und Entriegelung des Staufachdeckels stets ein Schlüssel verwendet, der in einem Schloss gedreht werden muss. Dies ist unkomfortabel, da zu jedem Öffnen und Schließen des Staufachs der Fahrzeugschlüssel benötigt wird.

Die gattungsgemäße EP 2 168 849 A1 zeigt einen Verriegelungsmechanismus an einem Staufach, der durch einen Elektromotor in eine Öffnungsstellung bewegbar ist.

Auch in der JP H10 7053 A, der US 2007/247280 A1, der DE 41 01 116 A1, der DE 41 02 714 A1, der WO 2009/101470 A1, der JP 2001 187592 A, der JP 2011 063981 A und der JP H03 295778 A werden elektromotorisch oder elektromagnetisch betätigte Verriegelungsmechanismen für ein Staufach diskutiert.

Aufgabe der Erfindung ist es, die Bedienung eines Staufaches eines motorisiertes Zweirads für den Benutzer komfortabler zu gestalten.

Zu diesem Zweck ist in motorisiertes Zweirad umfassend eine Baugruppe mit einem Staufach mit den Merkmalen des Anspruchs 1 vorgesehen. Anstelle eines Schlüssels, der in einem Schloss bewegt wird, wird daher nur ein entsprechendes Eingabesignal an die Steuereinheit benötigt, um den Deckel des Staufachs zu öffnen.

Die Steuereinheit ist mit einem Schloss gekoppelt, das den Verriegelungsmechanismus permanent sperren kann, wobei durch ein Drehen eines Schlüssels im Schloss in eine bestimmte Stellung beispielsweise ein Signal an die Steuereinheit übermittelt werden kann, das angibt, ob das Eingabesignal zur Betätigung des Elektromotors von der Steuereinheit blockiert oder aber ausgeführt werden soll.

Das Eingabesignal wird bevorzugt durch einen Schalter geliefert, der mit dem Elektromotor gekoppelt ist. Insbesondere wird als Schalter ein Taster verwendet, der beim Niederdrücken das Eingabesignal an die Steuereinheit erzeugt. Die Steuereinheit versorgt auf den Eingang des Eingabesignals hin den Elektromotor mit Strom, und dieser bewegt den Verriegelungsmechanismus in die Öffnungsstellung.

Der Schalter kann fest am Zweirad angeordnet sein, etwa an einem Verkleidungsteil oder im Cockpit. In einer bevorzugten Variante befindet sich der Schalter neben einem Schalter für eine Sitzheizung einer Sitzbank des motorisierten Zweirads außen an einer Verkleidung des Zweirads im Bereich der Sitzbank. Dies hat sowohl den Vorteil, dass der Schalter in der Nähe eines Sitzbank-Staufachs angeordnet werden kann, als auch den Vorteil, dass bereits eine elektrische Versorgungsleitung in die Verkleidung des motorisierten Zweirads für den Schalter für die Sitzheizung gelegt ist, an die einfach ein weiterer Schalter angeschlossen werden kann.

Alternativ kann der Schalter selbstverständlich auch in Griffnähe angeordnet sein, analog zu den Lenkerschaltern wie etwa dem Blinker oder einem, "Not aus"-Schalter.

In einer alternativen Ausführungsform umfasst die Steuereinheit einen Empfänger, der ein drahtlos übertragenes Signal eines Senders empfangen kann, wobei der Sender mit einem Schalter verbunden ist, um das Signal zu erzeugen. Der Sender und der zugehörige Schalter sind z.B. an einem Fahrzeugschlüssel oder Schüsselanhänger angeordnet.

Um das Öffnen des Deckels des Staufach zu erleichtern und um dem Benutzer eindeutig erkennen zu lassen, das der Staufachdeckel geöffnet ist, ist vorzugsweise unter dem Deckel der Staufach ein Federelement angeordnet, das den Deckel in eine geöffnete Stellung vorspannt.

Das Federelement kann beispielsweise durch eine Dichtung, insbesondere eine Gummidichtung, gebildet sein, die an einem Rand der durch den Deckel verschließbaren Öffnung des Staufachs vorgesehen ist. Derartige Dichtungen dienen dazu, das Eindringen von Feuchtigkeit in den Innenraum des Staufachs zu verhindern und haben eine Eigenelastizität, die ausreichend ist, um den Staufachdeckel bei entriegelter Verriegelungsmechanik ein Stück aufzudrücken.

Das Staufach ist vorzugsweise diebstahlsicher am Zweirad angebracht, indem z. B. Befestigungselemente für das Staufach nur bei geöffnetem Staufach erreichbar sind.

Das Staufach ist z. B. unter einer Sitzbank des motorisierten Zweirads angeordnet. Natürlich kann die Erfindung auch für Staufächer an anderen Stellen des Zweirads eingesetzt werden, beispielsweise bei einem Staufach an einer Lenkerverkleidung. Es ist prinzipiell auch möglich, die Erfindung bei abnehmbaren Staufächern wie beispielsweise einem auf eine Gepäckbrücke aufsetzbaren Top Case umzusetzen.

Der Elektromotor ist bevorzugt fahrzeugfest montiert und kann außerhalb des Staufachs, insbesondere außerhalb eines Innenraums des Staufachs, angeordnet sein. Der Elektromotor kann jedoch beispielsweise zu Wartungszwecken durch den Innenraum des Staufachs zugänglich sein.

Um Kraft auf den Verriegelungsmechanismus übertragen zu können, ist der Elektromotor vorzugsweise mit diesem über einen Seilzug verbunden. Der Seilzug kann beispielsweise ein herkömmlicher Bowdenzug sein.

Vorstellbar ist auch eine elektromechanische Kopplung des Motors mit dem Verriegelungsmechanismus in einer Einheit. Es kann auch eine andere mechanische Kopplung z.B. in Form eines Hebels oder Mehrgelenks vorgesehen werden, wobei dann jeweils auf einen Seilzug verzichtet werden kann.

Während das Öffnen des Deckels stets durch eine Einwirkung des Elektromotors erfolgen kann, lässt sich der Deckel vorzugsweise von Hand schließen. Hierzu kann bei Schließen des Deckels durch eine Krafteinwirkung auf den Deckel der Verriegelungsmechanismus mechanisch in seine Verriegelungsstellung zurück bewegt werden.

Um dies zu vereinfachen, sollte der Verriegelungsmechanismus in seine Verriegelungsstellung vor gespannt sein.

Die Erfindung wird nachfolgend anhand eines Ausführungsbeispiels mit Bezug auf die beigefügten Zeichnungen näher beschrieben. In den Zeichnungen zeigen:
- Figur 1 eine schematische perspektivische Darstellung einer erfindungsgemäßen Baugruppe;
- Figur 2 ein Detail aus der Baugruppe aus Figur 1;

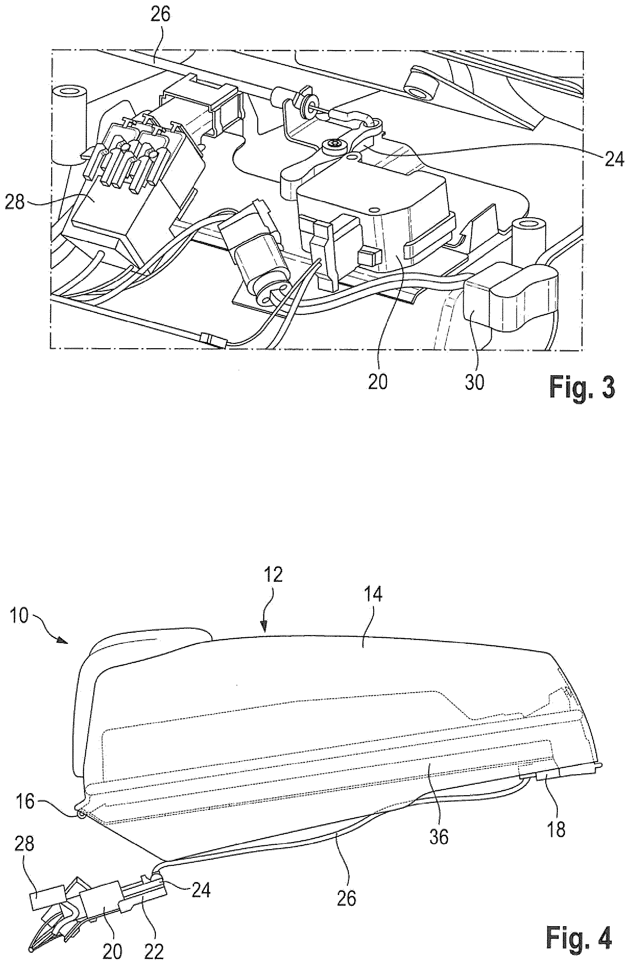

- Figur 3 ein vergrößertes Detail aus Figur 2;
- Figur 4 die Baugruppe aus Figur 1 in einer Seitenansicht;

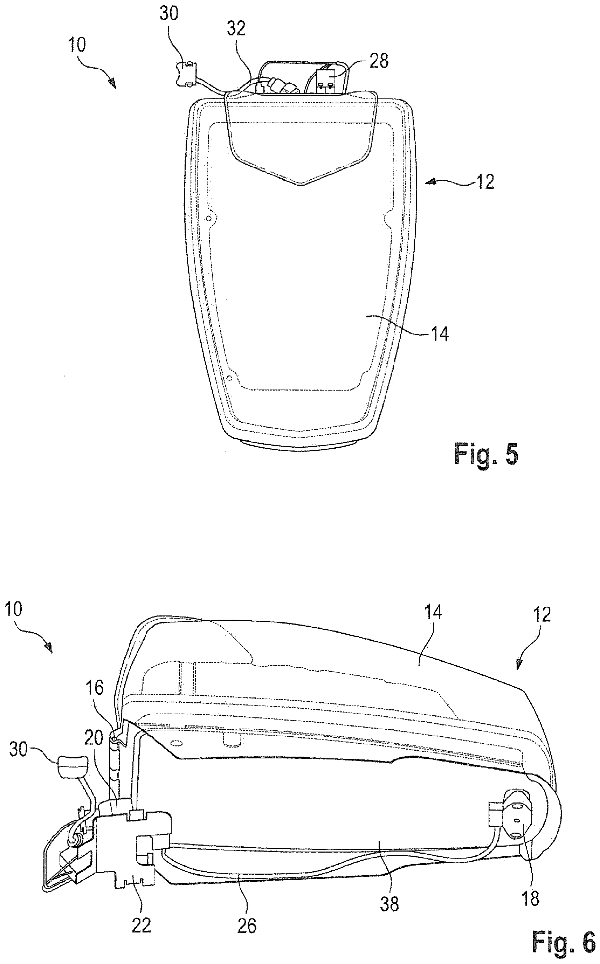

- Figur 5 die Baugruppe aus Figur 1 in einer Draufsicht; und
- Figur 6 die Baugruppe aus Figur 1 in einer Ansicht von der Unterseite.

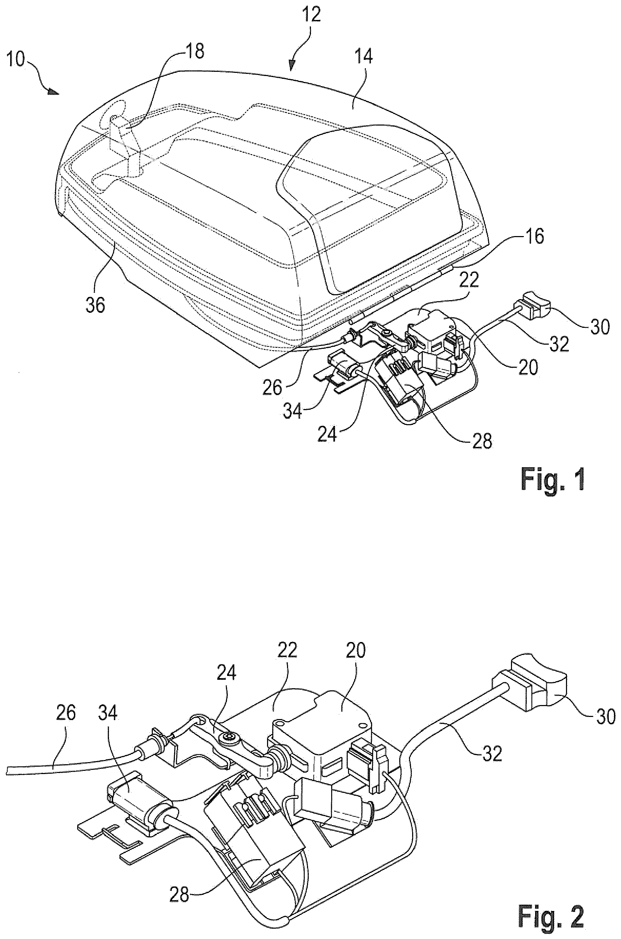

Figur 1 zeigt eine Baugruppe 10 mit einem Staufach 12 eines nicht näher dargestellten motorisierten Zweirads. Das motorisierte Zweirad ist beispielsweise ein Motorrad oder ein Motorroller.

In diesem Beispiel ist das Staufach 12 fest am Zweirad verbaut und ist unterhalb einer Sitzbank des Zweirads ausgebildet, die damit gleichzeitig einen Deckel 14 für das Staufach 12 bildet. Der Deckel 14 ist auf bekannte Weise über ein Scharnier 16 angelenkt und längs des Zweirads aufklappbar, wobei ein Verriegelungsmechanismus 18 vorgesehen ist, der in einer Verriegelungsstellung ein Öffnen des Deckels 14 verhindert und in einer Öffnungsstellung den Deckel 14 freigibt, sodass dieser hochgeklappt werden kann. Die Verriegelung erfolgt hier auf bekanntem Weg über eine Mechanik, die beispielsweise einen Hebel bewegt, der den Deckel 14 sperrt oder freigibt (nicht näher dargestellt).

Die Baugruppe 10 umfasst außerdem einen Elektromotor 20, der hier außerhalb des Staufachs 12, insbesondere außerhalb des Innenraums des Staufachs 12, auf einem separaten Träger 22 angeordnet ist und der fest am Zweirad verbaut ist. Der Träger 22 ist hier am scharnierseitigen Ende des Staufachs 12 positioniert.

Die Baugruppe 10 ist von außen nicht zugänglich, kann also von Unbefugten nicht manipuliert werden.

Der Elektromotor 20 ist hier als Schiebemotor ausgebildet und hat ein Ausgangselement, das bei Betätigung des Elektromotors 20 eine Linearbewegung ausführt. Das Ausgangselement ist mit einem Ende eines Hebels 24 verbunden und verschwenkt diesen bei Betätigung des Elektromotors 20. Der Hebel 24 ist an seinem anderen Ende mit einem Seilzug 26 verbunden, der so mit der Verriegelungsmechanismus 18 des Staufachs 12 gekoppelt ist, dass ein Verschwenken des Hebels 24 durch den Elektromotor 20 den Verriegelungsmechanismus 18 in dessen Öffnungsstellung bewegt.

Die Aktivierung des Elektromotors 20 wird durch eine Steuereinheit 28 gesteuert, die ebenfalls auf dem Träger 22 montiert ist. Die Steuereinheit 28 ist so ausgelegt, dass sie ein Eingangssignal aufnehmen und verarbeiten kann und daraufhin ein Aktivierungssignal an den Elektromotor 20 aussenden kann, das beispielsweise in einer Bestromung des Elektromotors 20 für eine vorbestimmte Zeit besteht.

In diesem Beispiel ist die Steuereinheit 28 mit einem Schalter 30 über eine Zuleitung 32 verbunden, wobei der Schalter 30 bei Betätigung das Eingangssignal an die Steuereinheit 28 zur Aktivierung des Elektromotors 20 liefert. Der Schalter 30 ist hier als Taster ausgebildet und ist in diesem Beispiel seitlich außen an der Verkleidung des Zweirads fixiert.

Der Schalter 30 ist an einer Stelle platziert, an der er gut zugänglich ist, wenn man das Staufach 12 unter der Sitzbank öffnen möchte. Hierzu eignet sich beispielsweise eine Position, an der bereits konventionell ein Schalter für eine Sitzheizung für die Sitzbank angeordnet ist. Natürlich kann der Schalter 30 auch anderswo im Zweirad verbaut sein, beispielsweise im Cockpit.

Die Stromversorgung für die Steuereinheit 28, den Elektromotor 20 und den Schalter 30 liefert ein nicht näher dargestelltes Bordnetz, an das die genannten Bauteile über einen Anschluss 34 angeschlossen sind.

Rings um die vom Deckel 14 verschlossene Öffnung des Staufachs 12 ist eine Dichtung 36 angeordnet, die ein Eindringen von Feuchtigkeit in den Innenraum des Staufachs 12 verhindert. Gleichzeitig bildet diese Dichtung 36 ein Federelement, das den Deckel 14 in eine geöffnete Stellung vorspannt, sodass beim Bewegen des Verriegelungsmechanismus 18 in dessen Öffnungsstellung der Deckel 14 automatisch ein Stückchen aufspringt und leicht geöffnet werden kann.

Während das Entriegeln, also das Bewegen des Verriegelungsmechanismus 18 in dessen Öffnungsstellung, durch den Elektromotor 20 und die von diesem veranlasste Bewegung des Hebels 24 erfolgt, wird beim Schließen des Deckels 14 der Verriegelungsmechanismus 18 durch eine Krafteinwirkung des Benutzers in seine Verriegelungsstellung zurückbewegt, ohne dass der Elektromotor 20 beteiligt wäre. Durch diese Rückbewegung in die Verriegelungsstellung nimmt der Hebel 24 wieder seine Ausgangsstellung an, sodass beim nächsten Bestromen des Elektromotors 20 über die Steuereinheit 28 erneut ein Verschwenken des Hebels 24 und eine Bewegung des Verriegelungsmechanismus 18 in die Öffnungsstellung erfolgt.

In diesem Beispiel ist der Verriegelungsmechanismus 18 an einem Karosserieträger 38 an der Unterseite des Staufachs 12 montiert.

In einer alternativen, hier nicht dargestellten Variante ist der Schalter nicht direkt über eine elektrische Leitung mit der Steuereinheit 28 verbunden, sondern ist an einer Fernbedienung ausgebildet. In diesem Fall weist die Steuereinheit 28 einen Empfänger auf, der ein drahtlos übertragenes Signal von einem mit dem Schalter verbundenen Sender empfangen kann. Nach Erhalt dieses Eingangssignals betätigt die Steuereinheit 28 wie oben beschrieben den Elektromotor 20 zum Öffnen des Deckels 14 des Staufachs 12. Der Schalter kann beispielsweise an einem Fahrzeugschlüssel angeordnet sein.

## Patentansprüche

1. Motorisiertes Zweirad umfassend eine Baugruppe mit einem Staufach (12), das einen verschließbaren Deckel (14) aufweist, an dem ein Verriegelungsmechanismus (18) angreift, der in eine Verriegelungsstellung und eine Öffnungsstellung bewegbar ist und der in der Verriegelungsstellung ein Öffnen des Deckels (14) verhindert, und mit einem Elektromotor (20), der mit dem Verriegelungsmechanismus (18) verbunden ist, sodass er diesen in die Öffnungsstellung bewegen kann, in der der Deckel (14) freigegeben ist, wobei der Elektromotor (20) mit einer Steuereinheit (28) verbunden ist, die auf ein Eingabesignal hin den Elektromotor (20) ansteuert, **dadurch gekennzeichnet, dass** die Steuereinheit (28) mit einem Schloss gekoppelt ist, das den Verriegelungsmechanismus (18) permanent sperren kann, wobei durch ein Drehen eines Schlüssels im Schloss in eine bestimmte Stellung ein Signal an die Steuereinheit (28) übermittelt wird, das angibt, ob das Eingabesignal zur Betätigung des Elektromotors (20) von der Steuereinheit (28) blockiert oder ausgeführt werden soll.

2. Motorisiertes Zweirad nach Anspruch 1, **dadurch gekennzeichnet, dass** der Elektromotor (20) mit einem Schalter (30) gekoppelt ist, der das Eingabesignal liefert.

3. Motorisiertes Zweirad nach Anspruch 2, **dadurch gekennzeichnet, dass** der Schalter (30) fest am Zweirad angeordnet ist oder dass die Steuereinheit (28) einen Empfänger umfasst, der ein drahtlos übertragenes Signal eines mit dem Schalter verbundenen Senders empfangen kann.

4. Motorisiertes Zweirad nach einem der vorhergehenden Ansprüche, **dadurch gekennzeichnet, dass** unter dem Deckel (14) des Staufachs (12) ein Federelement angeordnet ist, das den Deckel (14) in eine geöffnete Stellung vorspannt.

5. Motorisiertes Zweirad nach Anspruch 4, **dadurch gekennzeichnet, dass** das Federelement durch eine Dichtung (36) gebildet ist, die an einem Rand der durch den Deckel (14) verschließbaren Öffnung des Staufachs (12) vorgesehen ist.

6. Motorisiertes Zweirad nach einem der vorhergehenden Ansprüche, **dadurch gekennzeichnet, dass** das Staufach (12) unter einer Sitzbank des motorisierten Zweirads angeordnet ist.

7. Motorisiertes Zweirad nach einem der vorhergehenden Ansprüche, **dadurch gekennzeichnet, dass** der Elektromotor (20) außerhalb des Staufachs (12) angeordnet ist.

8. Motorisiertes Zweirad nach einem der vorhergehenden Ansprüche, **dadurch gekennzeichnet, dass** der Elektromotor (20) mit dem Verriegelungsmechanismus (18) über einen Seilzug (26) verbunden ist.

9. Motorisiertes Zweirad nach einem der vorhergehenden Ansprüche, **dadurch gekennzeichnet, dass** beim Schließen des Deckels (14) durch eine Krafteinwirkung auf den Deckel (14) der Verriegelungsmechanismus (18) mechanisch in die verriegelte Stellung bewegbar ist.

10. Motorisiertes Zweirad nach einem der vorhergehenden Ansprüche, **dadurch gekennzeichnet, dass** der Verriegelungsmechanismus (18) in seine Verriegelungsstellung vorgespannt ist.

## Claims

1. A motorised two-wheeled vehicle comprising an assembly with a storage compartment (12) which has a closable lid (14) on which a locking mechanism (18) acts, which mechanism can be moved into a locking position and into an opening position and which in the locking position prevents opening of the lid (14), and with an electric motor (20) which is connected to the locking mechanism (18) so that it can move the latter into the opening position, in which the lid (14) is released, wherein the electric motor (20) is connected to a control unit (28) which actuates the electric motor (20) in response to an input signal, **characterised in that** the control unit (28) is coupled with a lock which can permanently block the locking mechanism (18), wherein by turning a key in the lock into a particular position a signal is transmitted to the control unit (28) which indicates whether the input signal for activating the electric motor (20) should be blocked or executed by the control unit (28).

2. A motorised two-wheeled vehicle according to Claim 1, **characterised in that** the electric motor (20) is coupled with a switch (30) which supplies the input signal.

3. A motorised two-wheeled vehicle according to Claim 2, **characterised in that** the switch (30) is arranged fixedly on the two-wheeled vehicle, or **in that** the control unit (28) comprises a receiver which can receive a wirelessly transmitted signal of a transmitter connected to the switch.

4. A motorised two-wheeled vehicle according to one of the preceding claims, **characterised in that** under the lid (14) of the storage compartment (12) there is arranged a spring element which pre-tensions the lid (14) into an opened position.

5. A motorised two-wheeled vehicle according to Claim 4, **characterised in that** the spring element is formed by a seal (36) which is provided on an edge of the opening of the storage compartment (12) which can be closed by the lid (14).

6. A motorised two-wheeled vehicle according to one of the preceding claims, **characterised in that** the storage compartment (12) is arranged under a seat of the motorised two-wheeled vehicle.

7. A motorised two-wheeled vehicle according to one of the preceding claims, **characterised in that** the electric motor (20) is arranged outside the storage compartment (12).

8. A motorised two-wheeled vehicle according to one of the preceding claims, **characterised in that** the electric motor (20) is connected to the locking mechanism (18) by way of a cable pull (26).

9. A motorised two-wheeled vehicle according to one of the preceding claims, **characterised in that** upon closing the lid (14) by an application of force on the lid (14) the locking mechanism (18) can be moved mechanically into the locked position.

10. A motorised two-wheeled vehicle according to one of the preceding claims, **characterised in that** the locking mechanism (18) is pre-tensioned into its locking position.

## Revendications

1. Deux-roues motorisé comprenant un module comportent un compartiment de rangement (12) muni d'un couvercle refermable (14) sur lequel vient en prise un mécanisme de verrouillage (18) qui peut être déplacé dans une position de verrouillage et dans une position d'ouverture, et qui, dans la position de verrouillage empêche l'ouverture du couvercle (14), ainsi qu'un moteur électrique (20) qui est relié au mécanisme de verrouillage (18) de sorte qu'il puisse déplacer celui-ci dans la position d'ouverture dans laquelle le couvercle (14) est libéré, le moteur électrique (20) étant relié à une unité de commande (28) qui commande le moteur électrique (20) sur le fondement d'un signal d'entrée,
**caractérisé en ce que**
l'unité de commande (28) est couplée à une serrure qui peut bloquer en permanence le mécanisme de verrouillage (18), une rotation d'une clé dans la serrure dans une position déterminée transmettant à l'unité de commande (28) un signal qui indique si le signal d'entrée permettant d'actionner le moteur électrique (20) de l'unité de commande (28) doit être bloqué ou exécuté.

2. Deux-roues motorisé conforme à la revendication 1,
**caractérisé en ce que**
le moteur électrique (20) est couplé à un commutateur (30) qui fournit le signal d'entrée.

3. Deux-roues motorisé conforme à la revendication 2,
**caractérisé en ce que**
le commutateur (30) est monté solidairement sur le deux-roues ou l'unité de commande (28) comporte un récepteur qui peut recevoir un signal transmis par une liaison sans fil d'un émetteur relié au commutateur.

4. Deux-roues motorisé conforme à l'une des revendications précédentes,
**caractérisé en ce que**
sous le couvercle (14) du compartiment de rangement (12) est monté un élément de ressort qui rappelle le couvercle (14) en position ouverte.

5. Deux-roues motorisé conforme à la revendication 4,
**caractérisé en ce que**
l'élément de ressort (36) est formé par un joint d'étanchéité qui est situé sur un bord de l'ouverture du compartiment de rangement (12) pouvant être fermée par le couvercle (14).

6. Deux-roues motorisé conforme à l'une des revendications précédentes,
**caractérisé en ce que**
le compartiment de rangement (12) est situé au-dessous d'une banquette du deux-roues motorisé.

7. Deux-roues motorisé conforme à l'une des revendications précédentes,
**caractérisé en ce que**
le moteur électrique (20) est monté à l'extérieur du compartiment de rangement (12).

8. Deux-roues motorisé conforme à l'une des revendications précédentes,
**caractérisé en ce que**
le moteur électrique (20) est relié au mécanisme de verrouillage (18) par un câble (26).

9. Deux-roues motorisé conforme à l'une des revendications précédentes,
**caractérisé en ce que**
lors de La fermeture du couvercle (14), le mécanisme de verrouillage (18) peut être déplacé mécaniquement dans la position verrouillée par l'action d'une force sur le couvercle (14).

10. Deux-roues motorisé conforme à l'une des revendications précédentes,
**caractérisé en ce que**
le mécanisme de verrouillage (18) est précontraint dans sa position de verrouillage.
